# EUROPEAN PATENT APPLICATION

(11) **EP 4 764 106 A1**
(43) Date of publication of application: **24.06.2026**
(21) Application number: 24307266.7
(22) Date of filing: 23.12.2024
(51) Int. Cl.: E04C 2/04, B32B 13/08, B32B 13/14, E04B 2/72, E04C 2/26

(54) **GYPSUM BOARD WITH LONGITUDINAL DENSE AREAS AND METHOD OF MANUFACTURE**

(71) Applicant: Saint-Gobain Placo, 92400 Courbevoie (FR)
(72) Inventor: COTTIN, Alexandre, Loughborough, LE126JT (GB); BRAJER, Xavier, 93300 Aubervilliers (FR); LE GOURRIEREC BRAUN, Corentin, 93300 Aubervilliers (FR); NGUYEN, Christine, 92400 Courbevoie (FR)
(74) Representative: Saint-Gobain Recherche

(57) **Abstract**

The invention relates to a gypsum board (10) comprising a first cover sheet (11), a second cover sheet (12) and a body (13) arranged in between, the body (13) comprising:
- at least three longitudinal dense areas (141, 142, 143), made of a first gypsum-based material (14), two of which being arranged along each of the two longitudinal edges of the gypsum board, and
- at least two longitudinal low density areas (151, 152), made of a second gypsum-based material (15), each longitudinal low density areas being arranged between two longitudinal dense areas,
wherein the first gypsum-based material (14) has a density greater than the density of the second gypsum-based material (15).

The invention also relates to a partition wall comprising a gypsum board according to the invention and to a method for manufacturing a gypsum board according to the invention.

## Description

### Technical field

The invention relates to the field of gypsum boards, in particular comprising longitudinal dense areas, useful for the assembly of partitions and ceilings in the construction and renovation of buildings.

### Background

Gypsum boards (also called plasterboards, gypsum panels or wallboards) are widely used to make partitions, cladding of vertical or inclined walls or to make suspended or non-suspended ceilings. A wall or ceiling is generally made by assembling and attaching large gypsum wallboards to a supporting frame (e.g., wood studs or metal framing). Then, the joints where sections of the boards are butted together are covered with a joint compound for a better finish.

The gypsum boards are generally wide, flat and rectangular panels made-up of a gypsum-based body (or core), covered on each of its two main faces by a sheet serving as support and reinforcement (back cover sheet and front cover sheet, generally made of a fibrous material such as heavy paper or fiberglass mats).

Conventional methods of manufacturing gypsum board are based on the reaction of water and stucco (also known as "calcined gypsum" or "plaster"). When stucco is mixed with water, the resulting aqueous mixture or "slurry" (which initially contains calcined gypsum, i.e., calcium sulfate hemihydrate particles) reacts and stiffens to become set gypsum (formation of crystals of calcium sulfate dihydrate also called gypsum).

Gypsum boards are produced industrially by continuous processes where stucco is continuously and uniformly dispersed in water to form the aqueous slurry. Optional additives may also be added to the slurry to control the reaction time (accelerators or retarders) or to bring chemical or physical properties to the board (foaming agents, surfactants, binders, fibers, wet strength enhancing materials, biocides, reinforcing agents, flame retardants, water repellents, etc.). Air or foam can also be fed to the slurry and homogeneously mixed in order to reduce the density of the gypsum board (by forming voids or bubbles entrapped in the gypsum-based body once the slurry has hardened).

Once all the ingredients and/or foam are homogeneously mixed, the fluid slurry is discharged from the mixer (through an outlet chute or "boot") and spread onto a continuous strip of a first cover sheet. The strip with the slurry is driven by a conveyor belt to a forming station (extruder). A moving, continuous strip of a second facing sheet is fed to the extruder and placed on the top of the slurry while the resulting board (with the slurry positioned between the two sheets) is pressed through the extruder so that the board is formed to the desired thickness and width (shaping phase). The board then travels along a conveyor belt for a time during which the hydration reaction occurs and the board stiffens (setting or stiffening phase). After the board hardened, the continuous board is cut into individual boards of the desired length that are then dryed to remove the remaining water ("free" or unreacted water) and to yield the dry product.

The boards have mechanical properties that intend to satisfy the standards in force. The strength of a board is defined by different parameters such as the resistance to deflection under load (or "flexural strength"), the nail pull resistance or the compressive strength. Such properties can be influenced by the physical properties of the sheets of the board, the gypsum core, the sheets/gypsum core bond and even the set time or the fluidity of the slurry. It is also desirable to have light boards to facilitate installation, especially when the board must be attached at height (partition or ceiling) or when using boards of larger sizes (e.g., a greater length/height). Thus, it is known to introduce air voids in (or to foam) the core of the board in order to reduce its density and then its weight. However, the decrease in density also results in a decrease in strength of the board. The challenge is therefore to limit the weight of the boards as much as possible while maintaining good mechanical performance and strength.

Reinforcing fibers dispersed in the outer sheets of the board have been used in order to combine lightness, fire-resistance and high flexural strength, as described in the document US 4265979. Such construction is known as glass-reinforced gypsum board ("GRG") or as glass fibre reinforced gypsum board ("GFRG"). Alternatively, the document EP3492439 describes a gypsum board comprising a strengthening agent in the gypsum hardened body. In document US10421250, a reinforcing layer against one of the sheets has been used to improve the strength properties, said layer comprising a denser gypsum material with a high concentration of an enhancing additive.

The balance between a sufficiently low weight and a sufficiently high strength remains delicate, in particular when trying to increase the reachable height of gypsum boards. Therefore, there is still a need to decrease as much as possible the weight of gypsum boards while maintaining high performance in terms of strength, quality and conformity.

### Summary

After extensive research, the inventors have surprisingly discovered that a localized increase of the gypsum density by using longitudinal denser areas allows to optimize the board weight while maintaining strength performance. In particular, the inventors surprisingly discovered that such a local increase allows to stiffen the link between the frame, the screws and the boards and to have a positive impact on the reachable height.

Hence, according to a first aspect, the present invention relates to a gypsum board comprising a first cover sheet, a second cover sheet and a body arranged in between, the body comprising:
- at least three longitudinal dense areas, made of a first gypsum-based material, two of which being arranged along each of the two longitudinal edges of the gypsum board, and
- at least two longitudinal low density areas, made of a second gypsum-based material, each longitudinal low density areas being arranged between two longitudinal dense areas,
wherein the first gypsum-based material has a density greater than the density of the second gypsum-based material.

The present invention also relates to a partition wall comprising a gypsum board according to the present invention.

Another object of the present invention is a method for manufacturing a gypsum board comprising at least three longitudinal dense areas made of a first gypsum-based material and at least two longitudinal low density areas made of a second gypsum-based material, said method comprising:
- providing a first cover sheet;
- providing a first slurry comprising plaster and water;
- providing a second slurry comprising plaster and water;
- discharging the first slurry on the first cover sheet so as to deposit a longitudinal line of first slurry along both side edges of the first cover sheet and at least a third longitudinal line of first slurry, preferably centered relative to the width of the first cover sheet;
- discharging the second slurry on the first cover sheet so as to deposit at least two longitudinal lines of second slurry, each being arranged between two longitudinal lines of first slurry;
- placing a second cover sheet over the slurries and forming the gypsum board; and
- setting the gypsum board so that the first and second slurries respectively lead to the first and second gypsum-based materials.

### Brief description of the drawings

Fig. 1 represents a perspective view of a board according to the invention.
FIG. 2 illustrates a cross sectional view of a board according to an embodiment of the invention.
FIG. 3 illustrates a cross sectional view of a board according to another embodiment of the invention.
FIG. 4 illustrates a cross sectional view of a board according to another embodiment of the invention.
FIG. 5 represents a schematic view of a part of a process for manufacturing a board according to the invention.
Fig. 6 represents the global deflection (in mm) of the plasterboard partition wall depending on the imposed pressure (in Pa), obtained with numerical calculation.

### Detailed description

In this disclosure, the term "plaster" may be used interchangeably with the terms "calcined gypsum" or "stucco". It contains essentially calcium sulphate hemihydrate (CaSO₄, 1/2H₂O). It is generally obtained by dehydration (or "calcination") of gypsum under heat. Calcined gypsum can be produced in different crystalline forms such as alpha calcium sulfate hemihydrate (also called "α-hemihydrate" or "alpha plaster") and beta calcium sulfate hemihydrate (also called "β-hemihydrate" or "beta plaster") depending on the conditions of calcination.

As used herein, the term "gypsum" refers to any natural or synthetic gypsum, which contains essentially calcium sulphate dihydrate (CaSO₄, 2H₂O). It also corresponds to "set gypsum", which is obtained by reacting plaster with water (where plaster hydrates and sets into a crystalline gypsum matrix).

As used herein, the terms "aqueous slurry" or "slurry" are used interchangeably and mean a slurry or paste (i.e., not completely hardened) which results from the mixing of plaster with water. Thus, the slurry can comprise: essentially calcium sulphate hemihydrate (in an initial state of the mixture, before reaction), essentially calcium sulphate dihydrate (in a final state, after reaction), or a mixture thereof (in an intermediate state, not completely set). The slurry may also comprise one or more additives. Non limiting examples of additives include accelerators, retarders, foaming agents, surfactants, binders, fibers, wet strength enhancing materials, biocides, reinforcing agents, flame retardants and water repellents.

As used herein, the term "gypsum-based material" refers to a material comprising mainly calcium sulfate dihydrate, for example at least 50 wt% (percentage by weight, relative to the total dry weight of the material). The gypsum-based material is obtained from a slurry comprising (in its initial state) plaster, water, and optional additives. In other words, the gypsum-based material is the product of the hydration reaction of plaster. The content of calcium sulfate dihydrate in the "gypsum-based material" may be at least 60 wt%, preferably at least 70 wt%, more preferably at least 80 wt%, even more preferably at least 90 wt% (based on the dry weight of the gypsum-based material). Preferably, the "gypsum-based material" comprises from 90 wt% to 100 wt%, more preferably from 95 wt% to 100 wt%, even more preferably from 97 wt% to 100 wt% of calcium sulfate dihydrate (based on the dry weight of the material). The gypsum-based material can also comprise one or more components coming from optional additives added to the slurry.

The term "gypsum board" (which may be used interchangeably with the terms "board" or "plasterboard") means a panel having a gypsum matrix sandwiched between two cover sheets. It can refer to the finished product formed from set gypsum but also to a board in the course of manufacture in which the gypsum is not completely set or dry.

As used herein, the "longitudinal" direction refers to the longitudinal direction of the gypsum board. In other words, the longitudinal direction is parallel to the direction of the continuous manufacturing process of the board (direction of the conveyor belt). It also corresponds to the direction of the "length" (or "height") of the board and is represented by the "X" axis in the figures. For a cut board, the "length" or "height" of a board is the longest dimension of the board.

As used herein, the "width" direction refers to the direction of the width of the gypsum board, which is orthogonal to the longitudinal direction of the board (i.e., orthogonal to the length of the board as defined above) and to the direction of its thickness. The "width" direction is represented by the "Y" axis in the figures.

As used herein, the "thickness" direction refers to a direction that is orthogonal to the planes of the cover sheets (represented by the "Z" axis in the figures).

According to a first aspect, the invention relates to a gypsum board comprising a first cover sheet, a second cover sheet and a body arranged in between, the body comprising:
- at least three longitudinal dense areas, made of a first gypsum-based material, two of which being arranged along each of the two longitudinal edges of the gypsum board, and
- at least two longitudinal low density areas, made of a second gypsum-based material, each longitudinal low density areas being arranged between two longitudinal dense areas,
wherein the first gypsum-based material has a density greater than the density of the second gypsum-based material.

Unexpectedly, it was found that such an arrangement allows to minimize the weight of the board without substantially impacting the strength of a partition compared to a "dense" board (for example a board available on the market having a Young modulus of about 4000 MPa). For example, compared to standard "light" boards (for example having a Young modulus of about 2300 MPa), the present invention allows to get boards with improved resistance to deflection by impacting two aspects: improvement of the screw-bonding stiffness and stiffness gain due to local stiffening. Such a solution is particularly advantageous for obtaining higher boards of better quality and holding (higher boards are generally submitted to higher constrains and higher local pressures). Without being bound by any particular theory, it is believed that the interrelationships between the longitudinal areas, the local stiffening and the screwing location on the board allows to impart desired board properties, and to optimize board properties as desired.

In this disclosure, the cover sheets may be fibrous or non-fibrous. They may be formed from paper (e.g., cellulosic), fibrous mat or other type of material (e.g., foil, plastic, glass mat, non-woven material such as blend of cellulosic and inorganic filler, etc.). One or both of the cover sheets may comprise individual sheets or multiple sheets. The sheets may comprise cellulosic fibers, glass fibers, ceramic fibers, mineral wool, or a combination of the aforementioned materials. They may comprise any other material or combination of materials, for example for enhancing their properties (strength, fire resistance, etc.). As used herein, the terms "top cover sheet", "bottom cover sheet", "front cover sheet" or "back cover sheet" may be used interchangeably.

In this disclosure, the term "longitudinal area" denotes an area that is continuous along the longitudinal direction (continuously made of a same gypsum-based material along the longitudinal direction) but that does not extend across all the width of the board (such an area is distinguished from a layer extending across the entire width of a plate). Each longitudinal area does not necessarily extend across all the thickness of the board and may for example be in contact with only one of the two cover sheets or may not be in contact with any of the cover sheets.

In this disclosure, each longitudinal low density areas is arranged between two longitudinal dense areas. In other words, two consecutive "longitudinal dense areas" are separated from a "longitudinal low density area". That is to say, there is an alternation of "dense" and "light" areas in the width of the board (the "dense" and "light" areas being respectively made of the first and the second gypsum-based materials), the alternation being in a plane orthogonal to the direction Z of the thickness of the board. Furthermore, each longitudinal edge (both side ends of the board) is part of a "dense" area. The terms "dense", "low density" or "light" are relative terms, simply used here to designate one material or area in relation to another. The "longitudinal dense areas" could also be referred here as a "longitudinal bearing areas" and the "longitudinal low density area" can also be called here "longitudinal intermediate area".

The gypsum board according to the invention comprises at least three longitudinal dense areas. Alternatively, the gypsum board according to the invention may comprise at least four longitudinal dense areas, alternatively at least five longitudinal dense areas. Preferably, the gypsum board according to the invention comprises at most seven longitudinal dense areas, more preferably at most five longitudinal dense areas. For example, the gypsum board according to the invention can comprise 3 to 7, preferably 3 to 5, for example 4 to 5 longitudinal dense areas.

According to a preferred embodiment, the gypsum board has three longitudinal dense areas and two longitudinal low density areas. Such an arrangement is optimal for the boards having the most common dimensions.

Preferably, in the gypsum board according to the invention, one longitudinal dense area is substantially centered relative to the width of the board. As used herein, "substantially centered" means that the longitudinal median plane of the board (which is orthogonal to the width of the board) passes through the area. In other words, one longitudinal dense area passes through the longitudinal median plane of the board. Such an arrangement is particularly advantageous when the center of the board match the screwing location for fixing the board to a supporting frame.

Advantageously, in the gypsum board according to the invention, the ratio of the Young's modulus of the first gypsum-based material to the Young's modulus of the second gypsum-based material is greater than 1, preferably greater than 1.2, more preferably greater than 1.5, even more preferably greater than 1.7.

Young's modulus (or Young modulus), also called modulus of elasticity, is the constant relating stress and strain for a linearly elastic material. In practical terms, it is a measure of a material's stiffness. The higher the modulus of elasticity, the stiffer a material is. Modulus of elasticity depends on the structural and chemical composition and may depend on the thickness of the material. The Young's modulus may be determined according to any suitable method, for example by performing deflection tests on specimens of specific size where different loads are applied on these specimens and the corresponding deformation or strain are observed depending on these loads (such as in the normalized method NF EN 520). Young's modulus corresponds to the slope of the linear part of the obtained stress-strain curve.

Preferably, in the gypsum board according to the invention, the first gypsum-based material presents a Young's modulus of at least 2500 MPa, more preferably at least 3000 MPa, more preferably at least 4000 MPa, even more preferably at least 5000 MPa. In the gypsum board according to the invention, the dry first gypsum-based material may present a Young's modulus of 2500 to 20000 MPa, preferably from 3000 to 18000 MPa, more preferably from 4000 to 16000 MPa, even more preferably from 5000 to 16000 MPa. Such values are particularly applicable for thicknesses of about 10 mm to 20 mm, preferably of about 10 mm to 15 mm.

Preferably, in the gypsum board according to the invention, the first gypsum-based material has a ratio of the Young's modulus to the thickness of the first gypsum material of 200 MPa/mm to 1600 MPa/mm, preferably of 240 MPa/mm to 1440 MPa/mm, more preferably from 320 MPa/mm to 1280 MPa/mm, even more preferably from 400 MPa/mm to 1280 MPa/mm.

Preferably, in the gypsum board according to the invention, the ratio of the density of the first gypsum-based material to the density of the second gypsum-based material is at least 1.2, more preferably at least 1.3, even more preferably at least 1.5. Preferably, the ratio of the density of the first gypsum-based material to the density of the second gypsum-based material is from 1.2 to 3, more preferably from 1.3 to 2.5, even more preferably from 1.5 to 2. This allows to improve system performance while limiting the weight of the board.

Preferably, in the gypsum board according to the invention, the density differential between the first gypsum-based material and the second gypsum-based material may be at least 150 kg/m³, preferably at least 200 kg/m³, more preferably at least 250 kg/m³, even more preferably at least 300 kg/m³ This allows to improve system performance while limiting the weight of the board.

In the gypsum board according to the invention, the density of the first gypsum-based material may be at least 550 kg/m³. Preferably, in the gypsum board according to the invention, the density of the first gypsum-based material is at least 700 kg/m³, preferably at least 800 kg/m³, preferably at least 900 kg/m³, even more preferably at least 1000 kg/m³. The density of the first gypsum-based material may for example be 700 to 1800 kg/m³, preferably 800 to 1600 kg/m³, more preferably 900 to 1600 kg/m³, even more preferably 1000 to 1600 kg/m³.

Preferably, in the gypsum board according to the invention, the density of the second gypsum-based material is at most 800 kg/m³, more preferably at most 720 kg/m³, even more preferably at most 700 kg/m³. The density of the second gypsum-based material may for example be 250 to 800 kg/m³, for example 250 to 720 kg/m³, for example 300 to 700 kg/m³.

According to one embodiment, in the gypsum board according to the invention, the longitudinal dense areas extend over the entire thickness of the body. In other words, each dense area extends from the front cover sheet to the back cover sheet so that it is in contact with both cover sheets.

According to another embodiment, in the gypsum board according to the invention, the body comprises a layer of a third gypsum-based material, said layer being in contact with one of the cover sheets (i.e., in contact with the first cover sheet or with the second cover sheet). For example, the third gypsum-based material may be in contact with a part or with all of said cover sheet, preferably with all of said cover sheet. The third gypsum-based material may have a greater density than the second gypsum-based material, preferably at least 1.1 times greater, more preferably at least 1.2 times greater. Preferably, the third gypsum-based material may be the first gypsum-based material.

Preferably, in the gypsum board according to the invention, each the longitudinal dense area has an average width of 3 to 20 cm, preferably 4 to 15 cm, more preferably 5 to 10 cm. Such a controlled width of the longitudinal dense areas is particularly advantageous for screwing in the denser areas which allows a global stiffening of the link between the supporting frame, the screws and the board.

More particularly, in the gypsum board according to the invention, each longitudinal dense area may cover a longitudinal strip of at least 3 cm wide, preferably of at least 4 cm wide, more preferably of at least 5 cm wide. In this disclosure, the width of such a strip is measured along the Y direction. Preferably, each longitudinal dense area covers a longitudinal strip of at most 20 cm wide, preferable of at most 15 cm wide, more preferably of at most 10 cm wide. In the gypsum board according to the invention, each area may cover a strip with a same or different width from the other. For example, the board may have a longitudinal dense area substantially centered relative to the width of the board, such a centered longitudinal dense area covering a longitudinal strip of width less than that of the two longitudinal edges of the board.

Preferably, in the gypsum board according to the invention, the thickness of each longitudinal dense area is at least 10 mm, preferably at least 11 mm, more preferably at least 12 mm.

Preferably, in the gypsum board according to the invention, the thickness of each longitudinal dense area is at least 70% of the thickness of the board, preferably at least 80%, more preferably at least 90%, even more preferably at least 95% of the thickness of the board.

Preferably, in the gypsum board according to the invention, the volume ratio of the first gypsum-based material to the second gypsum-based material is 0.08 to 1, preferably 0.1 to 1, more preferably 0.2 to 0.9, even more preferably 0.3 to 0.9. This allows to better optimize the weight of the board while maintaining strong system performance.

Preferably, the second gypsum-based material is porous. More preferably, the second gypsum-based material may contain 60% to 80% air by volume, based on the total volume of the second gypsum-based material.

The different gypsum-based materials may be prepared from different slurries having different compositions (i.e., resulting from different kind of plaster and/or containing different additives or amounts of additives). For example, the first gypsum-based material may be obtained from a first slurry and the second gypsum-based may be obtained from a second slurry having a different formulation than that of the first slurry. Alternatively, the second gypsum-based material may be obtained from a slurry having the same composition as the first slurry of the first gypsum-based materials, and to which air has been added. Thus, the first and second (and even the third if any) gypsum-based materials may all be prepared from a same formulated slurry.

Preferably, the second gypsum-based material is obtained from a slurry comprising plaster, water and a foaming agent. Foaming agents are well known and non-limiting examples include alkyl sulfates, alkyl ether sulfates and mixtures thereof.

Preferably, the first gypsum-based material is obtained from a slurry comprising plaster, water and a reinforcing agent.

According to one embodiment, in the gypsum board according to the invention, the first gypsum-based material is obtained from alpha plaster (i.e., from a first slurry comprising, in its initial state, alpha plaster). The use of alpha plaster (or α-hemihydrate) allows the production of a gypsum-based material with better mechanical properties compared to beta plaster (after reaction of hydration, the resulting gypsum-based material is harder and has greater resistance).

Optionally, the second gypsum-based material may be obtained from alpha plaster (for example from a second slurry having the same composition as the first slurry or a different composition than the first slurry). This also allows to improve the overall mechanical properties of the board.

The first gypsum-based material of the gypsum board according to the invention may comprise fibers, in particular reinforcing fibers. This helps to improve the cohesion of materials between them and the overall mechanical properties of the board. Non limiting examples of usable fibers include mineral fibers, such as glass fibers, carbon fibers, paper fibers, plant-based fibers, etc. Preferably, first gypsum-based material of the gypsum board comprises glass fibers.

The gypsum board according to the invention may have different dimensions.

For example, the board may have a height (or a "length") of 150 cm to 900 cm. Preferably, the length of the board is at least 250 cm, more preferably at least 300, even more preferably at least 360 cm, for example at least 500 cm. Preferably, the length of the board is at most 900 cm.

The board may have a width of 50 cm to 140 cm. Preferably, the width of the board is 60 to 125 cm.

The board may have a thickness of 6 mm to 40 mm. Preferably, the thickness of the board is 6 to 25 mm. More particularly, the thickness of the board may be about 12.5 mm. Indeed, the most common gypsum boards, have a mean thickness of 12.5 mm (sold under the name "BA 13").

The gypsum board according to the invention may have thinned edges ("BA") or straight edges ("BD").

Preferably, in the gypsum board according to the invention, the longitudinal edges of the board are thinner than the average thickness of the board. The thinning of the side edges generally makes it easier to hide the junction between two adjacent plates, for example by installing joint strips or calico and/or coating or jointing compound.

According to a particular embodiment, the longitudinal edges of the board have complementary forms. In particular, the forms may be able to fit one with the other. In this manner, two adjacent boards may be assembled with fit connections of their longitudinal edges. For example, the board may comprise obliquely inclined longitudinal edges as described for example in EP0887485. In another example, the board may comprise longitudinal edges with a "tongue and groove" system. Such a system may be applicable for reusable partitions. The present invention is particularly advantageous for boards having tongue and groove systems as denser edges improve the mechanics at joints position and the system performance.

A further object of the invention relates to a partition wall comprising a gypsum board according to the invention.

In particular, the partition wall may comprise a supporting frame (e.g., wood studs, metal framing or any other support) and at least two boards according to the invention, each board being fastened (e.g., screwed, nailed) on the supporting frame.

Advantageously, in the partition wall according to the invention, the gypsum board is fixed to a supporting frame using fastening means located in the longitudinal dense areas of the gypsum board. Examples of fastening means are not limited and include nails and screws.

Another object of the invention relates to a method for manufacturing a gypsum board according to the invention.

Another object of the invention relates to a method for manufacturing a gypsum board comprising at least three longitudinal dense areas made of a first gypsum-based material and at least two longitudinal lower density areas made of a second gypsum-based material, said method comprising:
- providing a first cover sheet;
- providing a first slurry comprising plaster and water;
- providing a second slurry comprising plaster and water;
- discharging the first slurry on the first cover sheet so as to deposit a longitudinal line of first slurry along both side edges of the first cover sheet and at least a third longitudinal line of first slurry, preferably centered relative to the width of the first cover sheet;
- discharging the second slurry on the first cover sheet so as to deposit at least two longitudinal lines of second slurry, each being arranged between two longitudinal lines of first slurry;
- placing a second cover sheet over the slurries and forming the gypsum board; and
- setting the gypsum board so that the first and second slurries respectively lead to the first and second gypsum-based materials.

The method according to the invention may also comprise, after setting the gypsum board, cutting and drying the gypsum board.

The method according to the invention may also comprise providing a third slurry comprising plaster and water and adding a layer of the third slurry on the first cover sheet and/or on the second cover sheet. Such a layer of third slurry may be added on the first cover sheet before discharging the first and second slurries on it. Alternatively or additionally, such a layer may be added on the second cover sheet before placing said second cover sheet over the first and second slurries.

It is understood that each slurry comprises, in an initial state, calcium sulfate hemihydrate (plaster), water and optional additives. Examples of additives are adhesives (such as starches, polyvinyl acetate, polyvinyl alcohol, dextrins, etc.), setting accelerators, setting retarders, anti-burning agents, anti-sag agents, fire-resistant agents, anti-shrinkage agents, biocidal agents, water repellents and reinforcing agents (polymers of mineral fibers, etc.).

In the method according to the invention, at least two separate slurries are provided. The different slurries may be prepared in any suitable manner. For example, the raw materials (plaster, water and optional additives) may be blended in separate mixers to form the respective slurries. Alternatively, a "main" mixer may be used to prepare a main slurry, then a portion of the main slurry may be diverted from the main mixer and conveyed through conduits to form the first slurry whereas the other portion of the main slurry is conveyed through conduits to form the second slurry. Additives, foam and/or further water may be added to each separate slurry so that it has the desired properties, for example by injection into the pressurized slurry line through injection ports and/or by mixing in a secondary mixer.

Preferably, in the method according to the invention, the second slurry is prepared by mixing a portion of the first slurry with entrained air so as to form a foamed second slurry.

In the method according to the invention, the first and second slurries are discharged on the first cover sheet so as to deposit longitudinal lines of slurries that alternate in the width of the board (each longitudinal line of second slurry is arranged between two longitudinal lines of first slurry).

Preferably, in the method according to the invention, the first slurry leads to a first gypsum-based material having a density greater than the density of the second gypsum-based material resulting from the second slurry.

Preferably, in the method according to the invention, the first slurry has a density that is greater than the density of the second slurry.

In this disclosure, it is obvious that, during manufacturing, at the interface between the different slurries (in particular between the first and the second slurry), the compositions of the slurries can mix with each other so that there can be a composition gradient close to this interface (the interface between the two resulting gypsum-based materials is not clear).

Many different aspects and embodiments are possible. Some of those aspects and embodiments may be illustrated for better understanding by referencing the accompanying drawings, which do not limit the scope of the present invention.

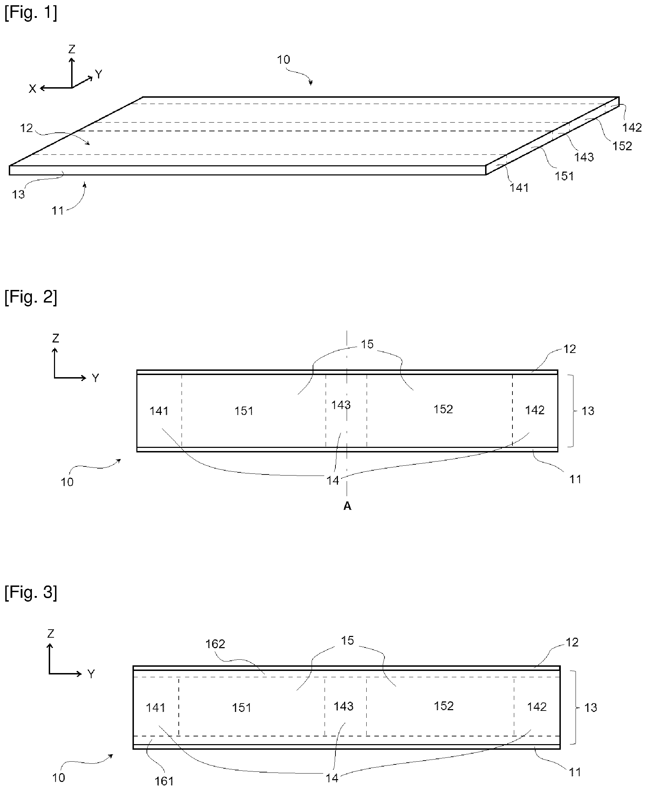

To illustrate an embodiment of the disclosure, reference is made to FIG. 1, which shows a perspective view of a gypsum board 10 according to the invention. A face paper 12 serves as a top cover sheet and a back paper 11 serves as a bottom cover sheet. The body 13 of the board is arranged in between. The body 13 comprises at least three longitudinal dense areas (141, 142, 143), made of a first gypsum-based material 14. Furthermore, two of the longitudinal dense areas (141 and 142) are arranged along both longitudinal edges of the gypsum board. A third longitudinal dense area 143 is substantially centered relative to the width of the board. The body 13 also comprises at least two longitudinal lower density areas (151, 152), made of a second gypsum-based material 15, which has a density lower than the density of the first gypsum-based material 14. The "dense" areas (141, 142, 143) and "light" areas (151, 152) continuously extend along the longitudinal direction of the board (the X-axis direction). Each longitudinal low density areas is arranged between two longitudinal dense areas. In other words, the "dense" areas alternate with the "light" areas in the width of the board (i.e. across the Y-axis direction). In FIG. 1, the X-axis direction indicates the longitudinal direction of the cover sheets and the molded body; the Y-axis direction indicates the width direction of the cover sheets and the molded body; and the Z-axis direction indicates the thickness direction of the molded body.

The height of the board (also referred as "length" in this disclosure) is the size of the board in its longitudinal direction (the "X" axis direction in the figures). The width of the board is the size of the board in the "Y" axis direction. The thickness of the board is the size of the board in the "Z" axis direction (which is orthogonal to the plane of a cover sheet).

FIG. 2 represents an enlarged cross-sectional view of an embodiment of the board according to the invention (view according to a "Y-Z" plane which is transverse to the longitudinal direction). The board 10 comprises three longitudinal dense areas 141, 142 and 143 (made of a first gypsum-based material 14), and two longitudinal lower density areas 151 and 152 (made of a second gypsum-based material 15). One longitudinal dense area 143 is substantially centered relative to the width of the board (passes through the longitudinal median plane A of the board). In this embodiment, the longitudinal dense areas extend over the entire thickness of the body (i.e., the longitudinal dense areas are in contact with both the first cover sheet 11 and the second cover sheet 12).

FIG. 3 represents an enlarged cross-sectional view of another embodiment of the board according to the invention (view according to a "Y-Z" plane which is transverse to the longitudinal direction). The board 10 comprises three longitudinal dense areas 141, 142 and 143, and two longitudinal lower density areas 151 and 152. One longitudinal dense area 143 is substantially centered relative to the width of the board (passes through the longitudinal median plane A of the board, not represented). The body also comprises a layer of a third material 16, being in contact with a cover sheet. In the embodiment shown in FIG. 3, the body comprises a layer 161 in contact with the entire surface of a side of the first cover sheet 11 and a layer 162 in contact with the entire surface of a side of the second cover sheet 12. The layers 161 and 162 are made of a third gypsum-based material 16, having preferably a density greater than the second gypsum-based material 15. The third material 16 may also be the first gypsum-based material 14.

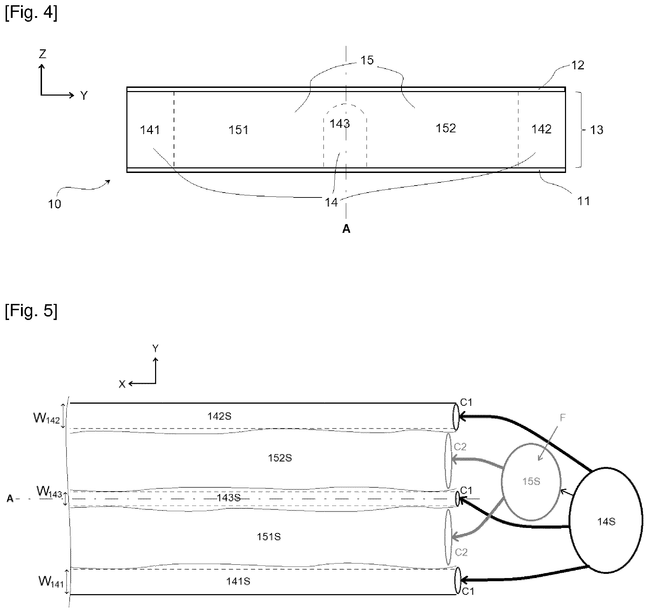

FIG. 4 represents an enlarged cross-sectional view of another embodiment of the board according to the invention (view according to a "Y-Z" plane which is transverse to the longitudinal direction). The board 10 comprises three longitudinal dense areas 141, 142 and 143, and two longitudinal lower density areas 151 and 152 which overlap the central area 143 and meet (a less dense second slurry may flow over the strip(s) of a denser first slurry).

FIG. 5 illustrates an example of an industrial process of manufacturing a gypsum board according to the invention, wherein at least two slurries are prepared and discharged on a first cover sheet (not represented) entrained by a conveyor belt in a longitudinal direction (represented by the "X" axis direction). A first slurry 14S is discharged using at least three conduits C1 so as to deposit at least three longitudinal lines of first slurry (141S, 142S, 143S). A second slurry 15S is discharged using at least two conduits C2 so as to deposit at least two longitudinal lines of second slurry (151S, 152S). The second slurry 15S may be prepared by mixing a portion of the first slurry 14S with foam or entrained air (F) so as to form a foamed second slurry 15S.

Then, a second cover sheet may be introduced above the slurries (not represented). The strip of plasterboard may then be extruded at the desired thickness by an extruder and transported for a period of time appropriate for allowing sufficient setting of the slurries.

After setting:
- the at least three longitudinal lines (141S, 142S, 143S) of first slurry 14S lead to longitudinal dense areas (141, 142, 143) of first gypsum-based material 14, two of which being arranged along each of the two longitudinal edges of the gypsum board;
- the at least two longitudinal lines (151S, 152S) of second slurry 15S lead to longitudinal low density areas (151, 152) of second gypsum-based material 15, each longitudinal low density area being arranged between two longitudinal dense areas.

In the embodiment shown in FIG. 5, one resulting longitudinal dense area will be substantially centered relative to the width of the board (passes through the longitudinal median plane A of the board).

After setting, the strip of plasterboard may be cut to the desired dimension, for example using a rotating knife. The boards are then transported toward a series of dryers in order to complete the setting and to remove the excess water, before being packaged and stored.

In all embodiments shown in the figures, each longitudinal dense area may cover a longitudinal strip having a width W of at least 3 cm. The width for each longitudinal dense area may be the same or different. For example, the width for the longitudinal dense area arranged along both longitudinal edges (W₁₄₁ and W₁₄₂) may be slightly larger than the width for the centered longitudinal dense area (W₁₄₃). Alternatively, they may be the same.

### Examples

The effect of longitudinal dense areas on the mechanical properties of the board has been studied using a numerical model. This model reproduces the 3D geometry of the UDL test (EN 520) and uses data provided by previous studies on the behaviors of several boards (including market references). For the sake of simplicity, in this study we will assume a homogeneous load applied on one face of the partitions.

The behaviours of 5 partitions were studied, each partition having a width of 3600 mm and a height of 3000 mm and being made with the different boards referenced below (comparative models B1 to B4 and model B5 according to the invention). More precisely, each partition is made with three boards on each of its two sides, each board having a width of 1200 mm, a height of 3000 mm and a thickness of 12.5 mm. The boards used in each of the 5 partition models are detailed below:
- B1 : a single standard BA13 board having a density of 9 kg/m² and a Young modulus at 2300 MPa ;
- B2 : a single standard BA13 board (same kind as B1) having two longitudinal dense edges, where each dense area has a width of 50 mm and a density of 12 kg/m² ;
- B3 : a double BA13 board (each plate being the same as B1) ;
- B4 : a single, very dense and performant board (Habito^{®} from PLACO) having a density of 12 kg/m² and a Young modulus at 4000 MPa ;
- B5 : a board according to the invention having three longitudinal dense areas and two longitudinal low density areas in between (wherein two longitudinal dense areas are located at the lateral edges of the board with a width of 50 mm and the third longitudinal dense area is substantially centered relative to the width of the board with a width of about 100 mm), wherein the first gypsum-based materiel has a density of 12 kg/m² and a Young modulus at 4000 MPa, the second gypsum-based materiel has a density of 9 kg/m² and a Young modulus at 2300 MPa.

For each of these five cases, the models of the boards above are built with screwing on a metallic frame at the side edges and the center of the boards.

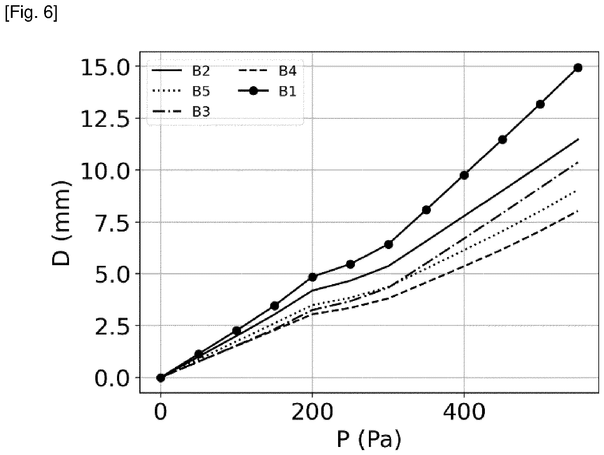

The modeling results are given in FIG. 6 which represents the global deflection "D" (mm) of the five models depending on the imposed pressure "P" (Pa). The results show that the board B5 according to the invention presents a better resistance to deflection compared to the reference B1 (single BA13 board) and compared to B2 (board having two dense edges). The particular arrangement according to the invention allows to improve partition bending stiffness, therefore resistance to deflection. The mechanical properties of the board according to the invention are rather close to those of the most performant board of high density and weight (B4: Habito^{®}), while the weight is substantially decreased (weight decreased by at least 20%). At higher pressure, the board according to the invention is even more performant than the double board B3 (better resistance to deflection).

Without being bound by any particular theory, it is believed that the improvement of the overall mechanical properties is due, in a synergistic way, to an improved screw-bonding stiffness in denser areas and to a stiffness gain thanks to local stiffening of the board. Hence, this particular arrangement allows to efficiently decrease the weight of the board while maintaining very high performances.

## Claims

1. A gypsum board (10) comprising a first cover sheet (11), a second cover
sheet (12) and a body (13) arranged in between, the body (13) comprising:
- at least three longitudinal dense areas (141, 142, 143), made of a first gypsum-based material (14), two of which being arranged along each of the two longitudinal edges of the gypsum board, and
- at least two longitudinal low density areas (151, 152), made of a second gypsum-based material (15), each longitudinal low density areas being arranged between two longitudinal dense areas,
wherein the first gypsum-based material (14) has a density greater than the density of the second gypsum-based material (15).

2. A gypsum board according to claim 1, wherein one longitudinal dense area (143) is substantially centered relative to the width of the board (10).

3. A gypsum board according to any of the preceding claims, having three longitudinal dense areas and two longitudinal low density areas.

4. A gypsum board according to any of the preceding claims, wherein the ratio of the Young's modulus of the first gypsum-based material (14) to the Young's modulus of the second gypsum-based material (15) is greater than 1, preferably greater than 1.2, more preferably greater than 1.5, even more preferably greater than 1.7.

5. A gypsum board according to any of the preceding claims, wherein the first gypsum-based material (14) presents a Young's modulus of at least 2500 MPa, more preferably at least 3000 MPa, more preferably at least 4000 MPa, even more preferably at least 5000 MPa.

6. A gypsum board according to any of the preceding claims, wherein the ratio of the density of the first gypsum-based material to the density of the second gypsum-based material is at least 1.2, more preferably at least 1.3, even more preferably at least 1.5.

7. A gypsum board according to any of the preceding claims, wherein the density of the first gypsum-based material is at least 800 kg/m³, more preferably at least 900 kg/m³, even more preferably at least 1000 kg/m³.

8. A gypsum board according to any of the preceding claims, wherein the longitudinal dense areas extend over the entire thickness of the body.

9. A gypsum board according to any of the preceding claims, the body (13) comprising a layer (161, 162) of a third gypsum-based material, said layer being in contact with one of the cover sheets (11, 12).

10. A gypsum board according to any of the preceding claims, wherein each longitudinal dense areas cover a strip of at least 3 cm wide, preferable at least 4 cm wide, more preferably at least 5 cm wide.

11. A gypsum board according to any of the preceding claims, wherein the volume ratio of the first gypsum-based material to the second gypsum-based material is 0.08 to 1, preferably 0.1 to 1, more preferably 0.2 to 0.9, even more preferably 0.3 to 0.9.

12. A gypsum board according to any of the preceding claims, wherein the second gypsum-based material is porous, in particular contains 60% to 80% air by volume, based on the total volume of the second gypsum-based material.

13. A gypsum board according to any of the preceding claims, wherein the first gypsum-based material is obtained from a first slurry comprising alpha plaster.

14. A gypsum board according to any of the preceding claims, wherein the edges of the board have complementary forms, in particular being able to fit one with the other.

15. A partition wall comprising a gypsum board according to any of claims 1 to 13.

16. A method for manufacturing a gypsum board comprising at least three
longitudinal dense areas made of a first gypsum-based material and at least two longitudinal low density areas made of a second gypsum-based material, said method comprising:
- providing a first cover sheet;
- providing a first slurry comprising plaster and water;
- providing a second slurry comprising plaster and water;
- discharging the first slurry on the first cover sheet so as to deposit a longitudinal line of first slurry along both side edges of the first cover sheet and at least a third longitudinal line of first slurry, preferably centered relative to the width of the first cover sheet;
- discharging the second slurry on the first cover sheet so as to deposit at least two longitudinal lines of second slurry, each being arranged between two longitudinal lines of first slurry;
- placing a second cover sheet over the slurries and forming the gypsum board; and
- setting the gypsum board so that the first and second slurries respectively lead to the first and second gypsum-based materials.

17. A method according to claim 16, wherein the second slurry is prepared by mixing a portion of the first slurry with entrained air so as to form a foamed second slurry.
